# EUROPÄISCHE PATENTANMELDUNG

(11) **EP 4 019 316 A1**
(43) Veröffentlichungstag der Anmeldung: **29.06.2022**
(21) Anmeldenummer: 20216437.2
(22) Anmeldetag: 22.12.2020
(51) Int. Cl.: B60L 9/04, H01R 13/703, H02J 1/00, B65G 23/00, B65G 43/00, H01R 13/62, H01R 13/621, H01R 13/629

(54) **ANSCHLUSSVERBINDER FÜR ANTRIEBSEINHEITEN**

(71) Anmelder: Siemens Aktiengesellschaft, 80333 München (DE)
(72) Erfinder: Kürten, Bernd, 90587 Obermichelbach (DE)

(57) **Zusammenfassung**

Vorgeschlagen wird ein Antriebssystem (1) mit einer Mehrzahl von Antriebseinheiten (2), wobei die Antriebseinheiten (2) jeweils einen Umrichter (3), und vorzugsweise einen Motor (4), umfassen, und mit einem Energieversorgungssystem (5), welches dazu ausgebildet ist, die Antriebseinheiten (2) mit einer elektrischen Energie zu versorgen, und mit einem Steuerungssystem (6), welches einen Steuerrechner (8) und wenigstens eine Steuerleitung (9) umfasst, wobei das Steuerungssystem (8) dazu ausgebildet ist, Steueranweisungen an die Antriebseinheiten (2) zu übertragen. Das Antriebssystem (1) ist dadurch gekennzeichnet, dass das Energieversorgungssystem (5) und die Antriebseinheiten (2) jeweils über einen ersten Anschlussverbinder lösbar miteinander verbunden sind, vorzugsweise über eine Steckverbindung, und dass das Steuerungssystem (6) und die Antriebseinheiten (2) jeweils über einen zweiten Anschlussverbinder lösbar miteinander verbunden sind, vorzugsweise über eine Steckverbindung.

## Beschreibung

Die Erfindung betrifft ein Antriebssystem mit einer Mehrzahl von Antriebseinheiten mit den Oberbegriffsmerkmalen des Anspruchs 1. Außerdem betrifft die Erfindung einen Anschlussverbinder für ein Antriebssystem und ein Verfahren zum Herstellen und Trennen einer Verbindung einer Antriebseinheit mit einem Energieversorgungssystem und einem Steuerungssystem.

Bei dezentralen Antriebssystemen mit einer Mehrzahl von Antriebseinheiten, beispielsweise bei Förderbändern, musste bislang bei einem Tausch einer einzelnen Antriebseinheit das gesamte Antriebssystem abgeschaltet werden. Dabei kommt es zu einem Stillstand der gesamten Anlage, was zu vermeiden ist. Ein bekanntes Antriebssystem ist beispielsweise in der DE 197 16 908 A1 offenbart.

Der Erfindung liegt die Aufgabe zugrunde, ein Antriebssystem mit einer Mehrzahl von Antriebseinheiten anzugeben, bei welchem ein einfacher Austausch einzelner Antriebseinheiten möglich ist, ohne dass es hierfür zu einem Stillstand des gesamten Antriebssystems kommen muss.

Diese Aufgabe wird gelöst durch ein Antriebssystem mit einer Mehrzahl von Antriebseinheiten mit den Merkmalen des Anspruchs 1. Zudem wird die Aufgabe gelöst durch einen Anschlussverbinder gemäß Anspruch 11. Außerdem wird die Aufgabe gelöst durch ein Verfahren zum Herstellen und Trennen einer Verbindung einer Antriebseinheit gemäß Anspruch 14. Vorteilhafte Weiterbildungen ergeben sich aus den abhängigen Ansprüchen.

Ein erfindungsgemäßes Antriebssystem umfasst eine Mehrzahl von Antriebseinheiten, wobei die Antriebseinheiten jeweils wenigstens einen Umrichter, und vorzugsweise zusätzlich einen Motor, umfassen. Das Antriebssystem weist zudem ein Energieversorgungssystem, welches dazu ausgebildet ist, die Antriebseinheiten mit einer elektrischen Energie zu versorgen, und ein Steuerungssystem, welches einen Steuerrechner und wenigstens eine Steuerleitung umfasst, wobei das Steuerungssystem dazu ausgebildet ist, Steueranweisungen an die Antriebseinheiten zu übertragen, auf.

Das Antriebssystem ist dadurch gekennzeichnet, dass das Energieversorgungssystem und die Antriebseinheiten jeweils über einen ersten Anschlussverbinder lösbar miteinander verbunden sind, vorzugsweise über eine Steckverbindung, und dass das Steuerungssystem und die Antriebseinheiten jeweils über einen zweiten Anschlussverbinder lösbar miteinander verbunden sind, vorzugsweise über eine Steckverbindung.

Mithilfe des Umrichters lässt sich beispielsweise ein mit dem Umrichter verbundener Motor steuern und/oder regeln. Dabei kann der Umrichter beispielsweise eine Spannungsamplitude oder eine Spannungsfrequenz vorgeben, mit welchen der Motor beaufschlagt wird. Bei dem Motor kann es sich beispielsweise um einen Elektromotor handeln.

Bei dem Energieversorgungssystem kann es sich um eine beliebige Spannungsquelle handeln (stationär oder netzgetrieben), die jeweils den Motor über den Umrichter einer Antriebseinheit mit elektrischer Energie versorgen kann, um einen bestimmungsgemäßen Gebrauch des Motors zu ermöglichen. Das elektrische Energieversorgungssystem ist dazu ausgebildet, eine Mehrzahl von Antriebseinheiten zu versorgen und ist dementsprechend in seiner Leistungsfähigkeit dimensioniert.

Der Steuerrechner kann jede beliebige Recheneinheit sein, die dazu ausgebildet ist, Steuerbefehle an den Umrichter und/oder den Motor einer jeweiligen Antriebseinheit zu generieren und diese über eine Steuerleitung, beispielsweise eine Kupferleitung oder eine Glasfaser, an die Antriebseinheiten zu übertragen.

Antriebseinheiten mit integrierten Umrichtern (und ggf. Motoren) bieten die Möglichkeit, die externen Anschlüsse auf ein Minimum zu reduzieren, da beispielsweise Temperaturfühler oder Positionsgeber intern realisiert werden können. Die Antriebseinheit weist lediglich eine Verbindung zu dem Energieversorgungssystem und zu dem Steuerungssystem auf. Bei der Verbindung zu dem Energieversorgungssystem kann es sich um eine Gleichspannungs- oder eine Wechselspannungsverbindung handeln (zweiphasig oder dreiphasig). Die Verbindung zu dem Steuerungssystem kann beispielsweise rein optisch sein, ohne dass eine elektrische Verbindung besteht.

Die Erfindung basiert auf der Idee, dass eine lösbare Verbindung zwischen den einzelnen Antriebseinheiten und der zentralen Energieversorgung sowie Steuerung einen Austausch einzelner (eventuell defekter oder zu überholender) Antriebseinheiten ermöglicht, ohne dass hierfür das Abschalten des gesamten Antriebssystems vonnöten wäre. Hierdurch können in dem Antriebssystem beispielsweise mehrere Antriebseinheiten hintereinandergeschaltet werden (was beispielsweise bei Förderbändern regelmäßig angewandt wird), ohne dass für den Austausch der Antriebseinheit eine Unterbrechung des Betriebes der übrigen Antriebseinheiten erfolgen muss. Der erste Anschlussverbinder und der zweite Anschlussverbinder verbleiben dabei im Antriebssystem und stellen den ordnungsgemäßen Betrieb sicher.

Bei der Antriebseinheit kann es sich auch um eine Kombination eines Umrichters mit einer Photovoltaikeinheit, beispielsweise einer Solarzelle, handeln. Die Vorteile des erfindungsgemäßen Antriebssystems kommen hier im Falle einer zu reparierenden oder auszutauschenden Photovoltaikeinheit (bzw. des Umrichters) zum Tragen, da die übrigen Antriebseinheiten (beispielsweise im Kontext einer photovoltaischen Anlage mit einer Vielzahl von Photovoltaikeinheiten (samt Umrichtern)) hierfür nicht abgeschaltet werden müssen.

Der erste Anschlussverbinder und der zweite Anschlussverbinder sind bevorzugt als ein gemeinsamer Anschlussverbinder ausgebildet, um die Handhabbarkeit zu verbessern.

Bevorzugt ist der gemeinsame Anschlussverbinder derart ausgebildet ist, dass bei einem Lösen der Verbindung des gemeinsamen Anschlussverbinders mit der Antriebseinheit die Verbindung zwischen dem Steuerungssystem und der Antriebseinheit zeitlich vor der Verbindung zwischen den Energieversorgungssystem und der Antriebseinheit getrennt wird. Durch die vorherige Trennung der Verbindung der Antriebseinheit zu dem Steuerungssystem kann der Motor bzw. der Umrichter auf den bevorstehenden Spannungsabfall vorbereitet werden, der mit der darauffolgenden Trennung der Verbindung der Antriebseinheit zu dem Energieversorgungssystem einhergeht. Dies kann prinzipiell im Fall von getrennten Anschlussverbindern (erster und zweiter Anschlussverbinder) auch manuell von einem Wartungstechniker vorgenommen werden. Die entsprechende Ausgestaltung des (gemeinsamen) Anschlussverbinders bringt jedoch darüber hinaus den Vorteil mit sich, dass die Reihenfolge des Trennens der Verbindung automatisch in elektrisch vorteilhafterweise Reihenfolge vorgenommen wird (ohne Lichtbögen oder dgl. zu verursachen).

Im Rahmen einer bevorzugten Weiterbildung der Erfindung weisen der erste Anschlussverbinder, der zweite Anschlussverbinder oder der gemeinsame Anschlussverbinder und die Antriebseinheit jeweils einen komplementären Anschluss für eine Energieversorgung der Antriebseinheit über ein Gleichspannungsnetz und zusätzlich jeweils einen komplementären Anschluss für eine Vorladung des Umrichters der Antriebseinheit auf. Eine Vorladung des Umrichters kann in an sich bekannter Weise zu einer Reduktion von Stromspitzen beim Herstellen der Verbindung des Umrichters mit dem Energieversorgungssystem führen und damit einer Zerstörung oder einer übermäßigen Degeneration von Teilen des Umrichters vorbeugen.

Besonders bevorzugt weisen der erste Anschlussverbinder und/oder der zweite Anschlussverbinder oder der gemeinsame Anschlussverbinder eine lösbare Verbindung zu dem Energieversorgungsystem und/oder zu dem Steuerungssystem auf. Hierdurch lässt sich eine Antriebseinheit mitsamt dem dazugehörigen Anschlussverbinder auf einfache Art und Weise aus einem bestehenden Antriebssystem entfernen bzw. zu einem bestehenden Antriebssystem hinzufügen. Bei den zuvor beschriebenen lösbaren Verbindungen handelt es sich vorzugsweise um Steckverbindungen, also einer Verbindung, die ein Stecker und eine dazugehörige, korrespondierende Ausnehmung umfasst.

Das Antriebssystem kann derart ausgebildet sein, dass mehrere Handlungsschritte in einer vorherbestimmten Reihenfolge vorgenommen werden müssen, um die lösbare Verbindung oder die lösbaren Verbindungen lösen zu können. Dies bringt den Vorteil mit sich, dass einem versehentlichen Lösen der Verbindung (en) vorgebeugt werden kann.

Dabei können der Umrichter und/oder der erste Anschlussverbinder und/oder der zweite Anschlussverbinder und/oder der gemeinsame Anschlussverbinder auf Hebeln basierende Verriegelungen und/oder voreilende Kontakte und/oder magnetische Verriegelungen aufweisen, derart, dass die mehreren Handlungsschritte in der vorherbestimmten Reihenfolge vorgenommen werden müssen, um die lösbare Verbindung oder die lösbaren Verbindungen lösen zu können. Hierdurch lässt sich die erforderliche Reihenfolge der durchzuführenden Schritte besonders einfach und effizient vorgeben.

Bei einer vorteilhaften Weiterbildung der Erfindung weisen die Antriebseinheit und/oder der erste Anschlussverbinder und/oder der zweite Anschlussverbinder und/oder der gemeinsame Anschlussverbinder ein optisches Element auf, insbesondere eine Leuchtdiode, durch die ein Abschluss eines Vorladevorgangs des Umrichters oder eine Erreichung eines definierten Zustandes der Antriebseinheit signalisierbar ist. Ein Monteur des Antriebssystems erhält hierdurch eine Information darüber, ob beispielsweise der Umrichter zum Anschluss der Haupt(energie)versorgung im Anschluss an den Vorladevorgang bereit ist. Oder er erhält eine Aussage darüber, ob die Verbindung der Antriebseinheit zu dem Energieversorgungssystem getrennt werden kann.

Der erste Anschlussverbinder und/oder der zweite Anschlussverbinder oder der gemeinsame Anschlussverbinder können ein Filterelement, insbesondere ein Kondensator, und/oder eine Schirmung aufweisen, um eine elektromagnetische Verträglichkeit des Anschlussverbinders zu erhöhen. Ebenfalls möglich sind derartige Maßnahmen beim Umrichter und/oder dem Motor. Zusätzlich können Maßnahmen an den Verbindungen des Anschlussverbinders (erster, zweiter und/oder gemeinsamer) vorgesehen sein, die die elektrischen Kontakte des Anschlussverbinders vor einem Lichtbogen schützen können (z.B. in Form eines Dauermagneten (Blasung) oder durch eine entsprechende Beschaltung der Kontakte).

Die Aufgabe wird zudem gelöst durch einen Anschlussverbinder für ein Antriebssystem nach einem der vorangegangenen Ansprüche, bei dem der Anschlussverbinder derart ausgebildet ist, dass bei einem Lösen der Verbindung des gemeinsamen Anschlussverbinders mit der Antriebseinheit die Verbindung zwischen dem Steuerungssystem und der Antriebseinheit zeitlich vor der Verbindung zwischen den Energieversorgungssystem und der Antriebseinheit getrennt wird.

Der Anschlussverbinder kann nicht nur für ein Antriebssystem verwendet werden. Er lässt sich auch für eine Kombination eines Umrichters mit einer stromerzeugenden Einheit, beispielsweise einer Photovoltaikeinheit, verwenden.

Vorteilhafterweise weist der Anschlussverbinder dabei eine Verbindung zu dem Energieversorgungssystem und/oder zu dem Steuerungssystem auf.

Besonders bevorzugt weist der Anschlussverbinder einen zu der Antriebseinheit komplementären Anschluss für eine Energieversorgung der Antriebseinheit über ein Gleichspannungsnetz und zusätzlich einen komplementären Anschluss für eine Vorladung des Umrichters der Antriebseinheit auf.

Die Aufgabe wird außerdem gelöst durch ein Verfahren zum Herstellen und Trennen einer Verbindung einer Antriebseinheit, die einen Umrichter (und vorzugsweise einen Motor) umfasst, mit einem Energieversorgungssystem, welches dazu ausgebildet ist, die Antriebseinheit mit einer elektrischen Energie zu versorgen, und mit einem Steuerungssystem, welches einen Steuerrechner und wenigstens eine Steuerleitung umfasst, wobei das Steuerungssystem dazu ausgebildet ist, Steueranweisungen an die Antriebseinheit zu übertragen. Das Verfahren umfasst die folgenden Schritte:
a) Herstellen einer Verbindung der Antriebseinheit mit dem Energieversorgungssystem und dem Steuerungssystem durch einen gemeinsamen Anschlussverbinder;
b) Signalisieren der Antriebseinheit, dass eine Trennung zum dem Energieversorgungssystem bevorsteht, wobei das Signalisieren vorzugsweise durch ein Trennen der Verbindung der Antriebseinheit mit dem Steuerungssystem erfolgt;
c) Im Anschluss Trennen der Verbindung der Antriebseinheit mit dem Energieversorgungssystem durch ein Trennen der Verbindung der Antriebseinheit mit dem Anschlussverbinder.

Dabei wird beim Verfahrensschritt a bevorzugt zunächst eine Verbindung des Energieversorgungssystems zu einem Vorladeanschluss der Antriebseinheit über den Anschlussverbinder hergestellt, um wie zuvor bereits beschrieben, übermäßig hohe Stromspitzen und eine damit verbundene Abnutzung/Zerstörung der Antriebseinheit zu verhindern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit der Zeichnung näher erläutert werden. Es zeigen:
- FIG 1: ein erfindungsgemäßes Antriebssystem mit einer Antriebseinheit und einem Anschlussverbinder in einer schematischen Darstellung;
- FIG 2: eine erste Ausführungsform eines erfindungsgemäßen Anschlussverbinders in einer schematischen Darstellung;
- FIG 3: eine zweite Ausführungsform eines erfindungsgemäßen Anschlussverbinders in einer schematischen Zeichnung; und
- FIG 4: eine dritte Ausführungsform eines erfindungsgemäßen Anschlussverbinders in einer schematischen Zeichnung.

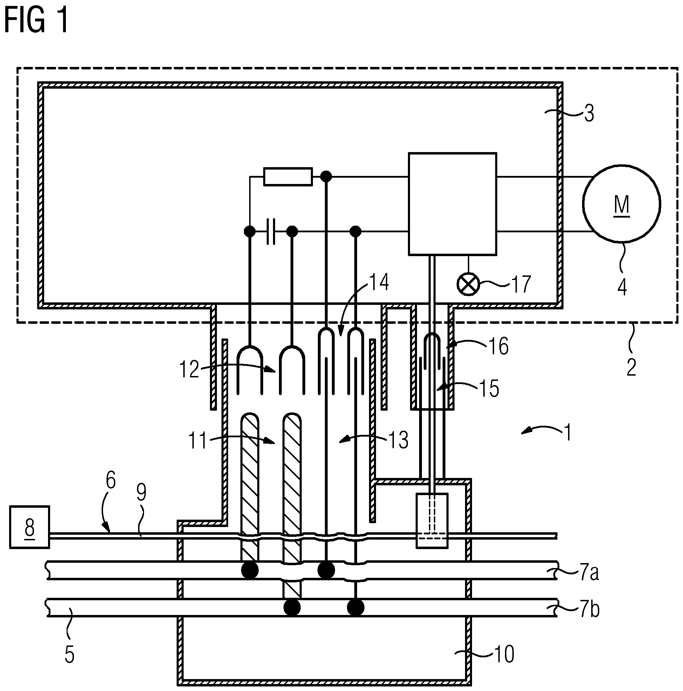

In FIG 1 ist ein Antriebssystem 1 dargestellt, welches eine Mehrzahl von Antriebseinheiten aufweist, von denen aus Gründen der Übersichtlichkeit nur eine einzige Antriebseinheit 2 dargestellt ist. Wenigstens eine weitere (nicht dargestellte) Antriebseinheit des Antriebssystems 1 ist im Wesentlichen identisch wie die in FIG 1 dargestellte Antriebseinheit 2 ausgebildet. Die Antriebseinheit 2 weist einen Umrichter 3 und einen Motor 4 auf.

Das Antriebssystem 1 umfasst darüber hinaus ein Energieversorgungssystem 5 und ein Steuerungssystem 6. Das Energieversorgungssystem 5 ist dazu ausgebildet, die Antriebseinheit 2 über Energieleitungen 7a, 7b (hier über ein Gleichspannungsnetz) mit elektrischer Energie zu versorgen. Das Steuerungssystem 6 weist einen Steuerrechner 8 und eine Steuerleitung 9 auf.

Das Energieversorgungssystem 5 und die Antriebseinheit 2 sind über einen Anschlussverbinder 10 lösbar miteinander verbunden. Hierzu weist der Anschlussverbinder 10 einen ersten Anschluss 11 und einen zweiten Anschluss 13 auf, die jeweils in Form eines Steckers oder Pins ausgebildet sind.

Der erste Anschluss 11 des Anschlussverbinders 10 ist derart ausgebildet, dass er in einen ersten Anschluss 12 der Antriebseinheit 2, der in Form einer Buchse ausgebildet ist, steckbar ist. Über den ersten Anschluss 11, 12 kann eine elektrische Energie zum Antrieb des Motors 4 (Hauptenergieversorgung) von dem Energieversorgungsystem 5 zu der Antriebseinheit 2 übertragen werden.

Der zweite Anschluss 13 des Anschlussverbinders 10 ist derart ausgebildet, dass er in einen zweiten Anschluss 14 der Antriebseinheit 2, der in Form einer Buchse ausgebildet ist, steckbar ist. Über den zweiten Anschluss 13, 14 kann eine elektrische Energie zum Vorladen des Umrichters 3 der Antriebseinheit 2 (Vorladeenergieversorgung) von dem Energieversorgungsystem 5 zu der Antriebseinheit 2 übertragen werden. Typischerweise sind die Anschlüsse 13, 14 für die Vorladung kleiner dimensioniert also die Anschlüsse 11, 12 für die Hauptenergieversorgung.

Der Anschlussverbinder 10 weist zudem einen dritten Anschluss 15 auf, welcher in Form eines Steckers oder Pins ausgebildet ist und in einen korrespondierenden Anschluss 16 der Antriebseinheit 2 in Form einer Buchse steckbar ist. Über diesen Anschluss 15, 16 ist das Steuerungssystem 6 mit der Antriebseinheit 2 lösbar verbindbar. Die Verbindung erfolgt im vorliegenden Beispiel über eine Glasfaser als Steuerleitung 9.

Ein Verfahren zum Herstellen und Trennen einer Verbindung der Antriebseinheit 2 mit dem Energieversorgungssystem 5 und mit dem Steuerungssystem 6 kann wie folgt durchgeführt werden. Der Anschlussverbinder 10, welcher eine Verbindung zu dem Energieversorgungssystem 5 und dem Steuerungssystem 6 aufweist, wird mit der Antriebseinheit 2 verbunden. Hierzu sind die Stecker des zweiten Anschlusses 13 länger ausgebildet als die Stecker des ersten Anschlusses 11, was in FIG 1 zu erkennen ist. Bei einem Einstecken des Anschlussverbinders 10 in die Antriebseinheit 2 (bzw. genauer: der Stecker der Anschlüsse 11, 13, 15 in die korrespondierenden Anschlüsse 12, 14, 16 der Antriebseinheit 2) wird durch diese Ausgestaltung der Stecker 13 die Verbindung zur Vorladung der Antriebseinheit 2 früher hergestellt als die Verbindung zur Hauptenergieversorgung des Motors 4 (man spricht hier auch von sogenannten "vorauseilenden Kontakten"). Dadurch wird automatisch, ohne dass ein Monteur hierfür besondere Sorgfalt üben müsste, ein Vorladen des Umrichters 3 ermöglicht, womit die zuvor bereits beschriebenen Vorteile hinsichtlich Haltbarkeit und Abnutzung der Antriebseinheit 2 verbunden sind. Über eine Leuchtdiode 17 als optisches Element (bzw. optisch wirkendes Element) kann die Antriebseinheit 3 signalisieren, dass der Vorladevorgang abgeschlossen ist.

In einem darauffolgenden Schritt wird der Antriebseinheit 2 signalisiert, dass die Verbindung wieder getrennt werden soll (beispielsweise im Fall eines geplanten Austauschs der Antriebseinheit 2). Hierzu kann der Steuerrechner 8 ein Signal an die Antriebseinheit 2 übertragen, das einen Übergang des Motors 4 bzw. Umrichters 3 in einen sicheren Zustand bewirkt. Es kann alternativ aber auch die Verbindung der Antriebseinheit 2 zu dem Steuerungssystem 6 getrennt werden, beispielsweise durch eine entsprechende Ausgestaltung der Anschlüsse 15, 16 des Anschlussverbinders 10 bzw. der Antriebseinheit 2. Diese können so ausgebildet sein, dass bei einem Abziehen/Lösen des Anschlussverbinders 10 von der Antriebseinheit 2 die Steuerverbindung zuerst getrennt wird (insbesondere vor den Anschlüssen 11, 12 der Hauptenergieversorgung). Mit anderen Worten ist der Anschlussverbinder 2 dabei derart ausgebildet ist, dass bei dem Lösen der Verbindung des Anschlussverbinders 10 mit der Antriebseinheit 2 die Verbindung zwischen dem Steuerungssystem 6 und der Antriebseinheit 2 zeitlich vor der Verbindung zwischen dem Energieversorgungssystem 5 und der Antriebseinheit 2 getrennt wird.

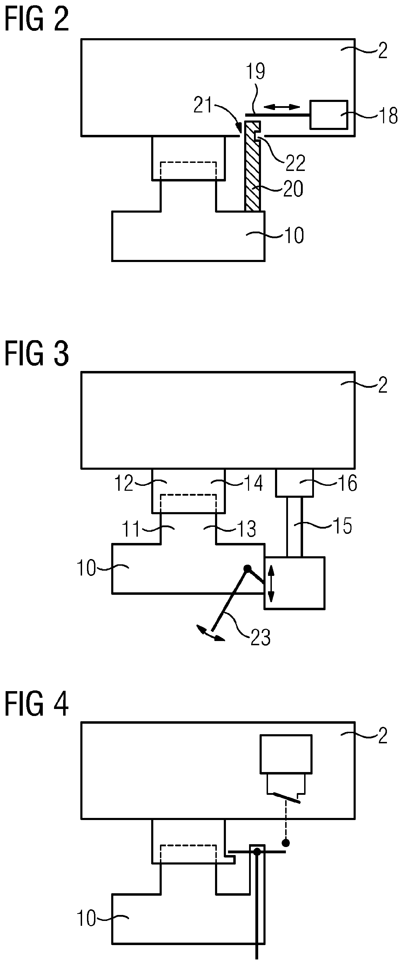

Im Anschluss wird die Verbindung der Antriebseinheit 2 mit dem Energieversorgungssystem 5 durch ein Trennen der Verbindung der Antriebseinheit 2 mit dem Anschlussverbinder 10 unterbrochen (durch Herausziehen des Anschlussverbinders 10 aus der Antriebseinheit 2). Es sind auch alternative Wege möglich, die Antriebseinheit 2 vorzubereiten, von denen einer anhand FIG 3 erläutert wird.

In FIG 2 ist ein Anschlussverbinder 10 und eine dazugehörige Antriebseinheit 2 dargestellt. Die Zeichnung ist gegenüber FIG 1 vereinfacht und stellt nur den Aspekt dar, dass bestimmte Handlungsschritte in einer vorherbestimmten Reihenfolge durchgeführt werden müssen, um die Verbindung zwischen Anschlussverbinder 10 und Antriebseinheit 2 lösen zu können. Die Antriebseinheit 2 weist hierzu eine (elektro-)magnetische Verriegelung 18 auf, die einen Stift 19 entlang einer Achse bewegen kann. Der Anschlussverbinder 10 weist einen Bolzen 20 auf, welcher beim Verbinden des Anschlussverbinders 10 mit der Antriebseinheit 2 in eine Ausnehmung 21 der Antriebseinheit 2 eingeführt wird. In dem Bolzen 20 befindet sich eine Aussparung 22, in welche der Stift 19 beim Verbinden von Anschlussverbinder 10 und Antriebseinheit 2 durch die Verriegelung 18 eingeführt werden kann. Der Bolzen 20 kann sich dadurch (in der Zeichenebene) nicht mehr nach unten bewegen, so dass Anschlussverbinder 10 und Antriebseinheit 2 aneinander gesichert sind. Ist ein Lösen der Verbindung beabsichtigt, erhält die Verriegelung 18 einen entsprechenden Steuerbefehl (über das Steuerungssystem 6 oder durch eine manuelle Handlung an der Antriebseinheit 2) und bewegt den Stift 19 aus der Aussparung 22 heraus, so dass der Anschlussverbinder 10 im Anschluss abgezogen werden kann. Dadurch erhält die Antriebseinheit 2 genügend Zeit, um sich auf die Trennung von dem Energieversorgungssystem 5 vorzubereiten.

In FIG 3 ist eine alternative Ausgestaltungsform eines Anschlussverbinders 10 dargestellt. Hierbei ist der Anschluss 15 für die Verbindung des Steuerungssystems 6 mit der Antriebseinheit 2 so ausgebildet, dass er gegen die Anschlüsse 11, 13 für die Energieversorgung verschoben werden kann. Hierzu kann eine auf einem Hebel 23 basierende Verriegelung verwendet werden. Durch diese Ausgestaltung des Anschlussverbinders 10 kann sichergestellt werden, dass zunächst die Verbindung der Antriebseinheit 2 zu dem Steuerungssystem 6 unterbrochen wird, um der Antriebseinheit 2 eine bevorstehende Trennung der Verbindung zu dem Energieversorgungssystem 5 zu signalisieren.

In FIG 4 weist die Antriebseinheit 2 eine interne Steuerung 24 auf, die entweder direkt (über einen Taster oder dergleichen) oder über das Steuerungssystem 6 ansprechbar ist. Die Steuerung 24 kann eine magnetisch wirkende Vorrichtung 25 triggern, welche über eine magnetische Anziehungskraft einen Verriegelungshebel 26 des Anschlussverbinders 10 zwischen einer Sperrstellung und einer Losstellung bewegen kann. Hierdurch kann sichergestellt werden, dass die Verbindung der Antriebseinheit 2 zu dem Anschlussverbinder 10 nicht ungewollt gelöst werden kann.

## Patentansprüche

1. Antriebssystem (1) mit einer Mehrzahl von Antriebseinheiten (2), wobei die Antriebseinheiten (2) jeweils einen Umrichter (3), und vorzugsweise einen Motor (4), umfassen, und mit einem Energieversorgungssystem (5), welches dazu ausgebildet ist, die Antriebseinheiten (2) mit einer elektrischen Energie zu versorgen, und mit einem Steuerungssystem (6), welches einen Steuerrechner (8) und wenigstens eine Steuerleitung (9) umfasst, wobei das Steuerungssystem (8) dazu ausgebildet ist, Steueranweisungen an die Antriebseinheiten (2) zu übertragen,
**dadurch gekennzeichnet, dass**
das Energieversorgungssystem (5) und die Antriebseinheiten (2) jeweils über einen ersten Anschlussverbinder lösbar miteinander verbunden sind, vorzugsweise über eine Steckverbindung, und dass das Steuerungssystem (6) und die Antriebseinheiten (2) jeweils über einen zweiten Anschlussverbinder lösbar miteinander verbunden sind, vorzugsweise über eine Steckverbindung.

2. Antriebssystem (1) nach Anspruch 1, bei dem der erste Anschlussverbinder und der zweite Anschlussverbinder jeweils als ein gemeinsamer Anschlussverbinder (10) ausgebildet sind.

3. Antriebssystem (1) nach Anspruch 2, bei dem der gemeinsame Anschlussverbinder (10) derart ausgebildet ist, dass bei einem Lösen der Verbindung des gemeinsamen Anschlussverbinders (10) mit der Antriebseinheit (2) die Verbindung zwischen dem Steuerungssystem (6) und der Antriebseinheit (2) zeitlich vor der Verbindung zwischen dem Energieversorgungssystem (5) und der Antriebseinheit (2) getrennt wird.

4. Antriebssystem (1) nach einem der Ansprüche 1 bis 3, bei dem der erste Anschlussverbinder, der zweite Anschlussverbinder oder der gemeinsame Anschlussverbinder (10) und die Antriebseinheit (2) jeweils einen komplementären Anschluss (11, 12) für eine Energieversorgung der Antriebseinheit über ein Gleichspannungsnetz und zusätzlich jeweils einen komplementären Anschluss (13, 14) für eine Vorladung des Umrichters (3) der Antriebseinheit (2) aufweisen.

5. Antriebssystem (1) nach einem der vorangegangenen Ansprüche, bei dem der erste Anschlussverbinder und/oder der zweite Anschlussverbinder oder der gemeinsame Anschlussverbinder (10) eine lösbare Verbindung zu dem Energieversorgungsystem (5) und/oder zu dem Steuerungssystem (6) aufweisen.

6. Antriebssystem (1) nach einem der vorangegangenen Ansprüche, bei dem die lösbare Verbindung eine Steckverbindung ist.

7. Antriebssystem (1) nach einem der vorangegangenen Ansprüche, bei dem mehrere Handlungsschritte in einer vorherbestimmten Reihenfolge vorgenommen werden müssen, um die lösbare Verbindung oder die lösbaren Verbindungen lösen zu können.

8. Antriebssystem (1) nach Anspruch 7, bei dem der Umrichter (3) und/oder der erste Anschlussverbinder und/oder der zweite Anschlussverbinder und/oder der gemeinsame Anschlussverbinder (10) auf Hebeln basierende Verriegelungen und/oder voreilende Kontakte und/oder magnetische Verriegelungen aufweisen, derart, dass die mehreren Handlungsschritte in der vorherbestimmten Reihenfolge vorgenommen werden müssen, um die lösbare Verbindung oder die lösbaren Verbindungen lösen zu können.

9. Antriebssystem (1) nach einem der vorangegangenen Ansprüche, bei dem die Antriebseinheit (2) und/oder der erste Anschlussverbinder und/oder der zweite Anschlussverbinder und/oder der gemeinsame Anschlussverbinder (10) ein optisches Element (17) aufweisen, insbesondere eine Leuchtdiode, durch die ein Abschluss eines Vorladevorgangs des Umrichters (3) oder eine Erreichung eines definierten Zustandes der Antriebseinheit (2) signalisierbar ist.

10. Antriebssystem (1) nach einem der vorangegangenen Ansprüche, bei dem der erste Anschlussverbinder und/oder der zweite Anschlussverbinder oder der gemeinsame Anschlussverbinder (10) ein Filterelement, insbesondere einen Kondensator, und/oder eine Schirmung aufweisen, um eine elektromagnetische Verträglichkeit zu erhöhen.

11. Anschlussverbinder (10) für ein Antriebssystem nach einem der vorangegangenen Ansprüche, bei dem der Anschlussverbinder (10) derart ausgebildet ist, dass bei einem Lösen der Verbindung des gemeinsamen Anschlussverbinders (10) mit der Antriebseinheit (2) die Verbindung zwischen dem Steuerungssystem (6) und der Antriebseinheit (2) zeitlich vor der Verbindung zwischen dem Energieversorgungssystem (5) und der Antriebseinheit (2) getrennt wird.

12. Anschlussverbinder (10) nach Anspruch 11, der eine lösbare Verbindung zu dem Energieversorgungsystem (5) und/oder zu dem Steuerungssystem (6) aufweist.

13. Anschlussverbinder (10) nach einem der Ansprüche 11 oder 12, der einen zu der Antriebseinheit (2) komplementären Anschluss (11) für eine Energieversorgung der Antriebseinheit (2) über ein Gleichspannungsnetz und zusätzlich einen komplementären Anschluss (14) für eine Vorladung des Umrichters (3) der Antriebseinheit (2) aufweist.

14. Verfahren zum Herstellen und Trennen einer Verbindung einer Antriebseinheit (2), die einen Umrichter (3), und vorzugsweise einen Motor (4), umfasst, mit einem Energieversorgungssystem (5), welches dazu ausgebildet ist, die Antriebseinheit (2) mit einer elektrischen Energie zu versorgen, und mit einem Steuerungssystem (6), welches einen Steuerrechner (8) und wenigstens eine Steuerleitung (9) umfasst, wobei das Steuerungssystem (6) dazu ausgebildet ist, Steueranweisungen an die Antriebseinheit (2) zu übertragen, das Verfahren umfassend:
a) Herstellen einer Verbindung der Antriebseinheit (2) mit dem Energieversorgungssystem (5) und dem Steuerungssystem (6) durch einen gemeinsamen Anschlussverbinder (10);
b) Signalisieren der Antriebseinheit (2), dass eine Trennung zum dem Energieversorgungssystem (5) bevorsteht, wobei das Signalisieren vorzugsweise durch ein Trennen der Verbindung der Antriebseinheit (10) mit dem Steuerungssystem (6) erfolgt;
c) Im Anschluss Trennen der Verbindung der Antriebseinheit (2) mit dem Energieversorgungssystem (5) durch ein Trennen der Verbindung der Antriebseinheit (2) mit dem Anschlussverbinder (10).

15. Verfahren nach Anspruch 14, bei dem beim Verfahrensschritt a gemäß Anspruch 14 zunächst eine Verbindung des Energieversorgungssystems (5) zu einem Vorladeanschluss (14) der Antriebseinheit (2) über den Anschlussverbinder (10) hergestellt wird.
